# EUROPEAN PATENT APPLICATION

(11) **EP 3 795 380 A1**
(43) Date of publication of application: **24.03.2021**
(21) Application number: 19803164.3
(22) Date of filing: 23.04.2019
(51) Int. Cl.: B60C 9/22, B60C 9/18, B60C 9/20

(54) **PNEUMATIC TIRE**

(30) Priority: 14.05.2018 JP 2018093001
(71) Applicant: Bridgestone Corporation, Chuo-Ku Tokyo 104-8340 (JP)
(72) Inventor: KON, Seiji, Tokyo 104-8340 (JP); ARIMA, Masayuki, Tokyo 104-8340 (JP); KOUNO, Yoshihide, Tokyo 104-8340 (JP)
(74) Representative: Oxley, Robin John George
(86) International application number: PCT/JP2019/017256
(87) International publication number: WO 2019/220888

(57) **Abstract**

A pneumatic tire including: a pair of bead cores; a carcass that is formed spanning the pair of bead cores; a belt layer that is disposed at a tire radial direction outside of the carcass and that is formed by covering a cord with a thermoplastic resin having an elastic modulus of from 100 MPa to 10,000 MPa and winding the cord around a tire circumferential direction; and a tread that is provided at a tire radial direction outside of the belt layer. A thickness of the pneumatic tire at a tire equatorial plane is no greater than 5 mm.

## Description

### Technical Field

The present disclosure relates to a pneumatic tire in which a thickness at a tire equatorial plane is no greater than 5 mm.

### Background Art

Japanese Patent Application Laid-Open (JP-A) No. H09-240215 describes a tire for a solar-powered car in which rolling resistance is lessened by gradually reducing the thickness of a tread portion on progression from a tire width direction center toward shoulder portions on either side, thereby reducing a ground contact area of a surface of the tread portion.

### SUMMARY OF INVENTION

### Technical Problem

Reducing the thickness of a tire as in the solar-powered car tire of JP-A No. H09-240215 might reduce puncture resistance.

The present disclosure provides a pneumatic tire capable of securing puncture resistance while reducing rolling resistance.

### Solution to Problem

A pneumatic tire of a first aspect includes: a pair of bead cores; a carcass that is formed spanning the pair of bead cores; a belt layer that is disposed at a tire radial direction outside of the carcass and that is formed by covering a cord with a thermoplastic resin having an elastic modulus of from 100 MPa to 10,000 MPa and winding the cord around a tire circumferential direction; and a tread that is provided at a tire radial direction outside of the belt layer. A thickness of the pneumatic tire at a tire equatorial plane is no greater than 5 mm.

The pneumatic tire of the first aspect includes the belt layer formed by covering the cord with thermoplastic resin. The thermoplastic resin has an elastic modulus of at least 100 MPa. Accordingly, the rigidity of the belt layer is higher, and the puncture resistance of the pneumatic tire is higher, than they would be cases in which rubber or a thermoplastic resin having an elastic modulus of below 100 MPa were employed. Moreover, since the higher rigidity makes the belt layer less susceptible to deformation, the pneumatic tire has low rolling resistance and high steering stability.

Moreover, since the thermoplastic resin has an elastic modulus of no greater than 10,000 MPa, the belt layer undergoes elastic deformation more readily and is less susceptible to brittle fracture than in cases in which the elastic modulus is greater than 10,000 MPa. This thereby improves the durability of the pneumatic tire.

Accordingly, the pneumatic tire of claim 1 exhibits less rolling resistance than a pneumatic tire not provided with a belt layer formed using a thermoplastic resin. Moreover, puncture resistance can be secured despite the thickness at the tire equatorial plane being no greater than 5 mm.

A pneumatic tire of a second aspect includes: a pair of bead cores; a carcass that is formed spanning the pair of bead cores; a belt layer that is disposed at a tire radial direction outside of the carcass and that is embedded with a cord wound around a tire circumferential direction; a reinforcing layer that is provided at at least one of a tire radial direction outside or a tire radial direction inside of the belt layer, and that is formed from a thermoplastic resin having an elastic modulus of from 100 MPa to 10,000 MPa; and a tread that is provided at the tire radial direction outside of the belt layer and the reinforcing layer. A thickness of the pneumatic tire at a tire equatorial plane is no greater than 5 mm.

The pneumatic tire of the second aspect includes the reinforcing layer formed from a thermoplastic resin. The thermoplastic resin has an elastic modulus of at least 100 MPa. Accordingly, the rigidity of the reinforcing layer is higher, and the puncture resistance of the pneumatic tire is higher, than they would be cases in which a thermoplastic resin having an elastic modulus of below 100 MPa were employed. Moreover, since the higher rigidity makes the reinforcing layer less susceptible to deformation, the pneumatic tire has low rolling resistance and high steering stability.

Moreover, since the thermoplastic resin has an elastic modulus of no greater than 10,000 MPa, the reinforcing layer elastically deforms more readily and is less susceptible to brittle fracture than in cases in which the elastic modulus is greater than 10,000 MPa. This thereby improves the durability of the pneumatic tire.

Accordingly, the pneumatic tire of claim 2 exhibits less rolling resistance than a pneumatic tire not provided with a reinforcing layer formed using a thermoplastic resin. Moreover, puncture resistance can be secured despite the thickness at the tire equatorial plane being no greater than 5 mm.

In a pneumatic tire of a third aspect, a tire width direction end portion of the reinforcing layer is disposed further toward a tire width direction outside than a tire width direction end portion of the belt layer.

In the pneumatic tire of the third aspect, the reinforcing layer is formed with a greater width than the belt layer, and so the belt layer is less susceptible to deformation. Specifically, in cases in which the reinforcing layer is further toward the tire radial direction inside than the belt layer, rigidity is supplemented by the reinforcing layer even when the belt layer attempts to deform toward the tire radial direction inside in response to an external force, thus suppressing deformation of the belt layer. Moreover, in cases in which the reinforcing layer is further toward the tire radial direction outside than the belt layer, input of external force to the belt layer is suppressed by the reinforcing layer. Deformation of the belt layer is accordingly suppressed. The belt layer is thus less susceptible to damage.

In a pneumatic tire of a fourth aspect, the belt layer is formed by winding the cord in a spiral pattern around the tire circumferential direction.

In the pneumatic tire of the fourth aspect, the belt layer is formed by winding the cord in a spiral pattern around the tire circumferential direction. The rigidity of the ring shape is therefore higher than it would be in cases in which, for example, plural cords were arranged alongside each other to form a belt layer. Annular surfaces of the belt layer and the tread running in the tire circumferential direction and the tire width direction are thus less susceptible to out-of-plane deformation, thus suppressing deformation of the pneumatic tire.

In a pneumatic tire of a fifth aspect, an angle of inclination of the cord with respect to the tire circumferential direction is no greater than 10°.

In the pneumatic tire of the fifth aspect, the angle of incline of the cord is closer to the circumferential direction than it would be in cases in which the angle of incline of a cord were greater than 10° with respect to the tire circumferential direction. The cord thereby exhibits a function as a retaining hoop, enabling out-of-plane deformation of the tread to be suppressed. Moreover, creep of the thermoplastic resin at high internal pressures can also be suppressed.

### Advantageous Effects of Invention

The pneumatic tire according to the present disclosure enables puncture resistance to be improved while reducing rolling resistance.

### BRIEF DESCRIPTION OF DRAWINGS

Fig. 1 is a cross-section illustrating half of a pneumatic tire according to a first exemplary embodiment of the present disclosure, as sectioned along a tire width direction and a tire radial direction.
Fig. 2 is a perspective view illustrating configuration of a belt layer of a pneumatic tire according to the first exemplary embodiment of the present disclosure.
Fig. 3A is a cross-section illustrating a belt layer of a pneumatic tire according to the first exemplary embodiment of the present disclosure.
Fig. 3B is a cross-section illustrating a modified example in which two reinforcing cords are embedded in a single resin-covered cord of a pneumatic tire according to the first exemplary embodiment of the present disclosure.
Fig. 4 is an enlarged view of part of a belt layer according to the first exemplary embodiment of the present disclosure, illustrating an angle of inclination of a resin-covered cord at a tire equatorial plane.
Fig. 5 is a cross-section illustrating half of a pneumatic tire according to a second exemplary embodiment of the present disclosure, as sectioned along a tire width direction and a tire radial direction.
Fig. 6 is a cross-section illustrating half of a pneumatic tire according to a modified example of the second exemplary embodiment of the present disclosure, in which a resin reinforcing layer is provided at a tire radial direction inside of a belt layer.

### DESCRIPTION OF EMBODIMENTS

### First Exemplary Embodiment

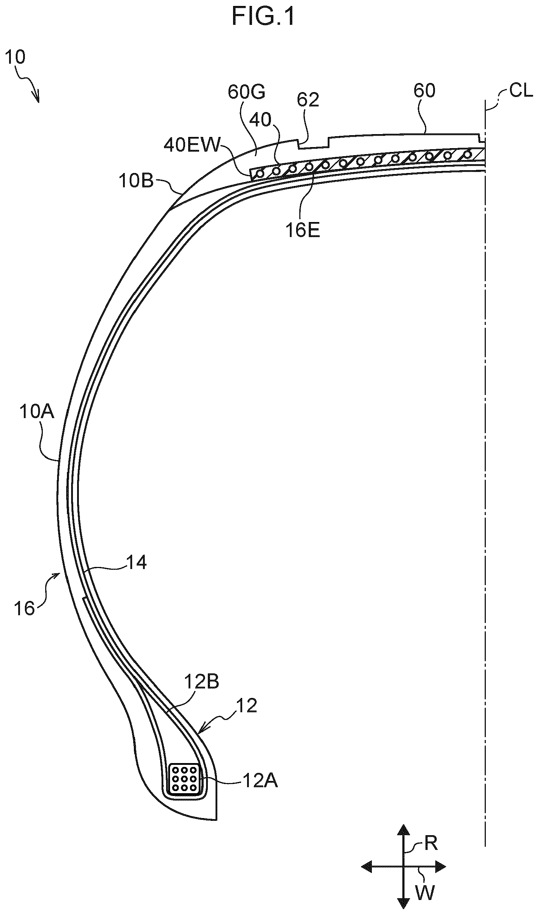

Fig. 1 is a cross-section illustrating one side of a pneumatic tire (referred to hereafter as a tire 10) according to a first exemplary embodiment of the present disclosure, as sectioned along a tire width direction and a tire radial direction (namely a cross-section as viewed along a tire circumferential direction). In the drawings, the arrow W indicates a width direction of the tire 10 (tire width direction), and the arrow R indicates a radial direction of the tire 10 (tire radial direction). Note that the tire width direction refers to a direction running parallel to the rotation axis of the tire 10. The tire radial direction refers to a direction orthogonal to the rotation axis of the tire 10. The letters CL indicate an equatorial plane (tire equatorial plane) of the tire 10.

In the first exemplary embodiment, a tire radial direction side toward the rotation axis of the tire 10 is referred to as the tire radial direction inside, and a tire radial direction side further away from the rotation axis of the tire 10 is referred to as the tire radial direction outside. A tire width direction side toward the tire equatorial plane CL is referred to as the tire width direction inside, and a tire width direction side further away from the tire equatorial plane CL is referred to as the tire width direction outside.

### Tire

Fig. 1 illustrates the tire 10 when assembled to a rim (not illustrated in the drawings) for a bicycle or a solar-powered car and inflated to a standard air pressure.

As illustrated in Fig. 1, the tire 10 includes a pair of bead portions 12, a carcass 14 straddling between bead cores 12A embedded in the respective bead portions 12 and including end portions anchored to the respective bead cores 12A, bead fillers 12B embedded in the respective bead portions 12 so as to extend from the bead cores 12A toward the tire radial direction outside along an outer surface of the carcass 14, a belt layer 40 provided at the tire radial direction outside of the carcass 14, and a tread 60 provided at the tire radial direction outside of the belt layer 40. Note that only the bead portion 12 on one side is illustrated in Fig. 1.

A thickness T of the tire 10 at the tire equatorial plane is no greater than 5 mm.
Note that the "thickness at the tire equatorial plane" refers to a dimension measured along the tire radial direction from an outer circumferential surface 60T of the tread 60 to an inner circumferential surface 14T of covering rubber that covers the carcass 14 at the tire equatorial plane.

### Bead Portions

The bead cores 12A are each configured from a wire bundle, and are embedded in the respective pair of bead portions 12. The carcass 14 straddles between the bead cores 12A. Various structures, for example structures with circular or polygonal shaped cross-section profiles, may be adopted for the bead cores 12A. A hexagonal shape may be adopted as an example of a polygonal shape; however, in the first exemplary embodiment a four-sided shape is employed.

In each of the bead portions 12, the bead filler 12B is embedded in a region enclosed by the carcass 14 anchored to the corresponding bead core 12A, and the bead filler 12B extends from the bead core 12A toward the tire radial direction outside.

### Carcass

The carcass 14 is a tire frame member formed by covering plural cords with covering rubber. The carcass 14 configures a tire frame extending in a toroid shape from one of the bead cores 12A to the other of the bead cores 12A. End portion sides of the carcass 14 are anchored to the respective bead cores 12A. Specifically, the end portion sides of the carcass 14 are folded back on themselves from the tire width direction inside toward the tire width direction outside around the respective bead cores 12A, and are anchored thereto.

Note that the carcass 14 of the first exemplary embodiment is a radial carcass. There is no particular limitation to the material employed for the carcass 14, and Rayon, Nylon, polyethylene naphthalate (PEN), polyethylene terephthalate (PET), an aramid, glass fibers, carbon fibers, steel, or the like may be employed therefor. From the perspective of weight reduction, an organic fiber cord is preferable. Although a range of from 20 to 60 strands per 50 mm are incorporated in the carcass, there is no limitation to this range.

Side rubber 16 is provided at the tire width direction outsides of the carcass 14. Each side rubber 16 forms a side portion 10A of the tire 10 extending from the corresponding bead portion 12 toward the tire radial direction outside, and is bonded to the tread 60. The side rubber 16 is formed with gradually decreasing thickness at a shoulder portion 10B. An end portion 16E of each side rubber 16 is disposed at the tire radial direction inside of the belt layer 40, described later, and further toward the tire width direction inside than a corresponding tire width direction end portion 40EW of the belt layer 40.

Note that the end portion 16E of the side rubber 16 may be disposed further toward the outside than the corresponding tire width direction end portion 40EW of the belt layer 40. In such cases, the tire width direction end portion 40EW of the belt layer 40 would be disposed contacting an outer circumferential surface of the carcass 14 instead of contacting the side rubber 16.

### Belt Layer

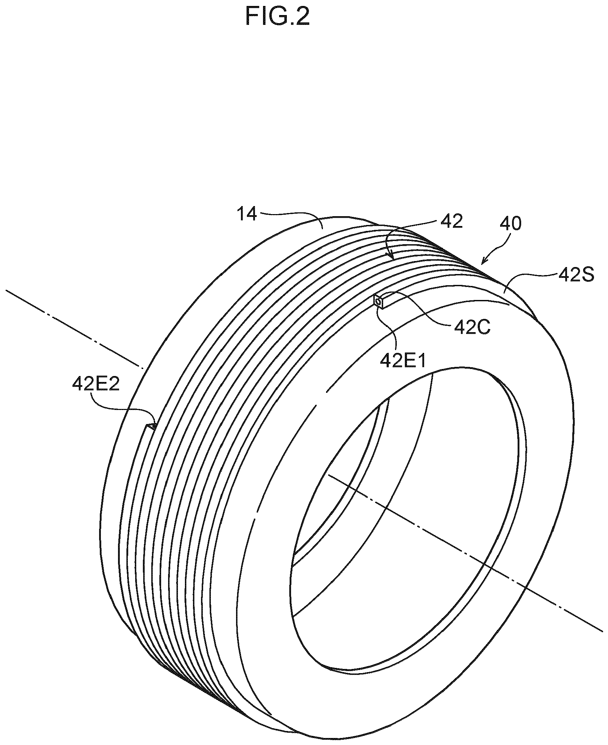

The belt layer 40 is laid at the tire radial direction outside of the carcass 14. As illustrated in Fig. 2, the belt layer 40 serves as a ring-shaped hoop, and is formed by winding a single resin-covered cord 42 in a spiral pattern in the tire circumferential direction around the outer circumferential surface of the carcass 14. Note that the spiral pattern referred to here indicates a state in which the single resin-covered cord 42 is wound around at least one full circuit of the periphery of the carcass 14.

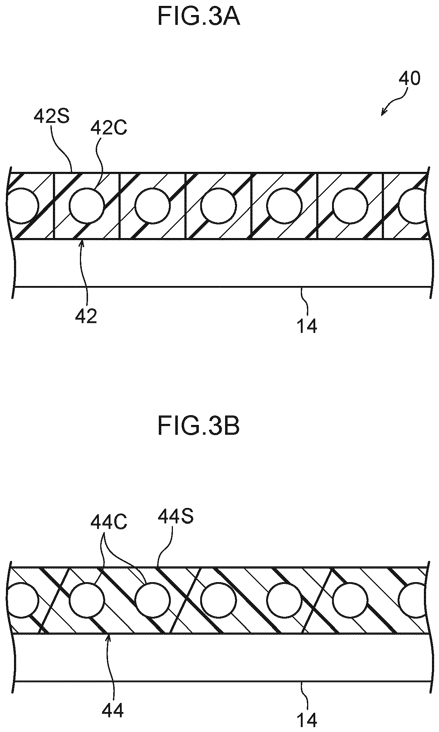

As illustrated in Fig. 3A, the resin-covered cord 42 is configured by covering a reinforcing cord 42C with a covering resin 42S, and has a substantially square shaped cross-section profile. The covering resin 42S is bonded to outer circumferential surfaces of the carcass 14 and the side rubber 16 disposed at the tire radial direction inside of the covering resin 42S using rubber or an adhesive.

Mutually adjacent locations of the covering resin 42S in the tire width direction are integrally bonded using thermal welding, an adhesive, or the like. The reinforcing cord 42C is thus formed into the belt layer 40 (resin-covered belt layer) covered with the covering resin 42S.

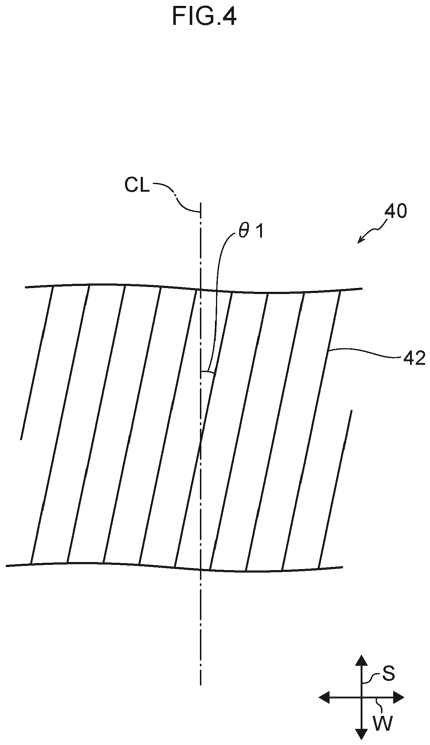

Fig. 4 is an enlarged view illustrating part of the belt layer 40 as viewed along the tire radial direction. As illustrated in Fig. 4, the resin-covered cord 42 is wound inclined at an angle θ1 with respect to the tire circumferential direction (the arrow S direction in Fig. 4) at the tire equatorial plane. The angle θ1 is set to no greater than 10° in the first exemplary embodiment.

The resin material employed as the covering resin 42S is a thermoplastic resin. This thermoplastic resin has an elastic modulus of from 100 MPa to 10,000 MPa.

Thermoplastic resins (including thermoplastic elastomers) are polymer compounds of materials that soften and flow with increased temperature, and that adopt a relatively hard and strong state when cooled. In the present specification, out of these, polymer compounds forming materials that soften and flow with increasing temperature, that adopt a relatively hard and strong state on cooling, and that have a rubber-like elasticity are considered to be thermoplastic elastomers. Polymer compounds forming materials that soften and flow with increasing temperature, that adopt a relatively hard and strong state on cooling, and do not have a rubber-like elasticity are considered to be non-elastomer thermoplastic resins, these being distinct from thermoplastic elastomers.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

The reinforcing cord 42C of the belt layer 40 of the first exemplary embodiment is configured from steel cord. This steel cord has a main component of steel and may include a minor amount of various other substances, such as carbon, manganese, silicon, phosphorus, sulfur, copper, or chrome.

Note that exemplary embodiments of the present disclosure are not limited thereto, and instead of steel cord, monofilament cord, or cord in which plural filaments are twisted together may be employed as the reinforcing cord 42C of the belt layer 40. Organic fibers of an aramid or the like, or of carbon or the like, may also be employed. Various twisting structure designs may be adopted, and various cross-section structures, twisting pitches, twisting directions, and distances between adjacent filaments may be employed. Furthermore, cord in which filaments of different materials are twisted together may be employed, and there is no particular limitation to the cross-section structure thereof, for which various twisting structures, such as single twists, layered twists, compound twists, or the like may be adopted.

### Tread

The tread 60 is provided at the tire radial direction outside of a resin reinforcing layer 50. The tread 60 is a location that makes ground contact with the road surface during travel, and a tread face of the tread 60 is formed with plural circumferential direction grooves 62 extending in the tire circumferential direction. The shapes and number of the circumferential direction grooves 62 are set as appropriate according to the water expelling properties, steering stability performance, and the like demanded of the tire 10.

### Operation

In the tire 10 according to the first exemplary embodiment, the reinforcing cord 42C is covered with the covering resin 42S configured by a thermoplastic resin to form the belt layer 40. This thermoplastic resin has an elastic modulus of at least 100 MPa. Accordingly, the belt layer 40 has higher rigidity and the tire 10 has greater puncture resistance than it would in cases in which rubber or a thermoplastic resin having an elastic modulus of less than 100 MPa were employed. Moreover, since the higher rigidity means that the belt layer 40 is less susceptible to deformation, the tire 10 attains low rolling resistance and high steering stability.

Since the thermoplastic resin has an elastic modulus of no greater than 10,000 MPa, the belt layer 40 undergoes elastic deformation more readily and is less susceptible to brittle fracture than in cases in which the thermoplastic resin has an elastic modulus of greater than 10,000 MPa. This thereby improves durability of the tire 10.

In the tire 10 according to the first exemplary embodiment, the belt layer 40 is formed by winding the resin-covered cord 42 in a spiral pattern around the tire circumferential direction. The rigidity of the ring shape is therefore higher than it would be in cases in which, for example, plural resin-covered cords were arranged alongside each other to form a belt layer. Annular surfaces of the belt layer 40 and the tread 60 running in the tire circumferential direction and the tire width direction are thus less susceptible to out-of-plane deformation, thus suppressing deformation of the tire 10.

Moreover, the angle of incline of the resin-covered cord 42 with respect to the tire circumferential direction is no greater than 10°. Accordingly, the angle of incline is closer to the circumferential direction than it would be in cases in which the angle of incline of a cord were greater than 10° with respect to the tire circumferential direction. The resin-covered cord 42 thereby exhibits a function as a retaining hoop, enabling out-of-plane deformation of the tread 60 to be suppressed. Moreover, creep of the thermoplastic resin at high internal pressures can also be suppressed.

Accordingly, the tire 10 according to the first exemplary embodiment exhibits less rolling resistance than a pneumatic tire not provided with a belt layer formed using a thermoplastic resin. Moreover, puncture resistance can be secured despite the thickness at the tire equatorial plane being no greater than 5 mm.

Note that although the belt layer 40 of the first exemplary embodiment is formed by winding the resin-covered cord 42, formed with a substantially square profile by covering the single reinforcing cord 42C with the covering resin 42S, around the outer circumferential surface of the carcass 14, exemplary embodiments of the present disclosure are not limited thereto.

For example, as illustrated in Fig. 3B, a resin-covered cord 44 formed with a substantially parallelogram shaped cross-section profile by covering plural reinforcing cords 44C with covering resin 44S may be wound around the outer circumferential surface of the carcass 14.

### Second Exemplary Embodiment

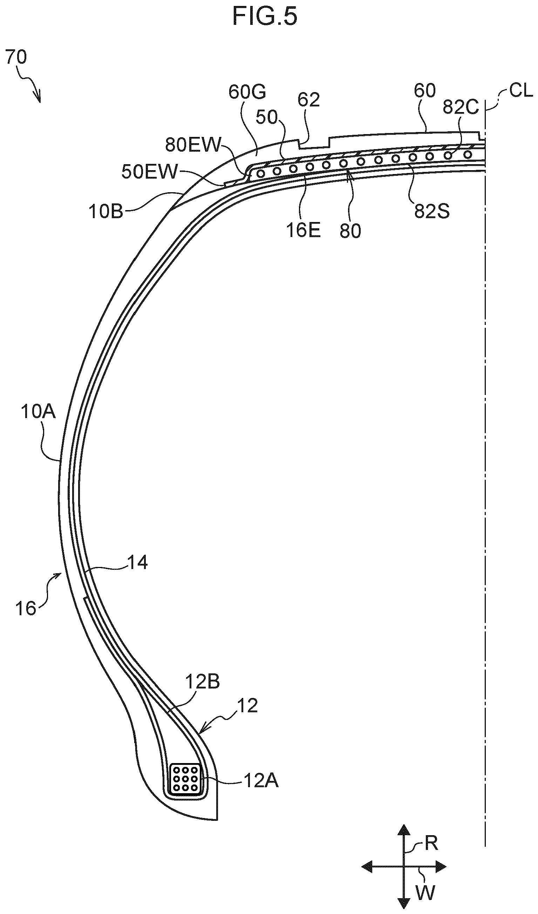

Fig. 5 is a cross-section illustrating one side of a pneumatic tire (referred to hereafter as a tire 70) according to a second embodiment of the present disclosure, as sectioned along the tire width direction and the tire radial direction (namely a cross-section as viewed along a tire circumferential direction). Note that configuration and operation of the tire 70 according to the second exemplary embodiment that are equivalent to those of the tire 10 according to the first exemplary embodiment are allocated the same reference numerals, and explanation thereof is omitted where appropriate.

### Belt Layer

As illustrated in Fig. 5, in the tire 70 of the second exemplary embodiment, a belt layer 80 is provided in place of the belt layer 40 of the first exemplary embodiment. The belt layer 80 is formed by winding a rubber-covered cord, formed by covering a reinforcing cord 82C with covering rubber 82S, around the tire circumferential direction in a spiral pattern. With the exception of the covering resin 42S and the covering rubber 82S, the belt layer 40 has a similar configuration to the belt layer 80.

### Resin Reinforcing Layer

In the tire 70, the resin reinforcing layer 50 is laid at the tire radial direction outside of the belt layer 80. The resin reinforcing layer 50 is a rigidity imparting member of the tire 70. Width direction end portions 50EW of the resin reinforcing layer 50 are disposed at the tire width direction outsides of respective width direction end portions 80EW of the belt layer 80. The belt layer 80 and the resin reinforcing layer 50, and the resin reinforcing layer 50 and the tread 60, are respectively integrated together using an adhesive or vulcanization adhesion.

The resin reinforcing layer 50 is formed from a thermoplastic resin. Accordingly, in a vulcanization process when molding the tire 70, the resin reinforcing layer 50 is formed in close contact with the tire width direction end portions 40EW of the belt layer 80.

### Operation

The tire 70 of the second exemplary embodiment includes the resin reinforcing layer 50 formed from a thermoplastic resin. This thermoplastic resin has an elastic modulus of at least 100 MPa. Accordingly, the rigidity of the resin reinforcing layer 50 is higher, and the puncture resistance of the tire 70 is higher, than they would be in cases in which a thermoplastic resin having an elastic modulus of below 100 MPa were employed. Moreover, since the higher rigidity makes the resin reinforcing layer 50 less susceptible to deformation, the tire 70 has low rolling resistance and high steering stability.

Moreover, since the thermoplastic resin has an elastic modulus of no greater than 10,000 MPa, the resin reinforcing layer 50 deforms more readily and is less susceptible to brittle fracture than it would be in cases in which the elastic modulus is greater than 10,000 MPa. This thereby improves the durability of the tire 70.

Accordingly, the tire 70 according to the second exemplary embodiment exhibits less rolling resistance than a pneumatic tire not provided with a reinforcing layer formed using a thermoplastic resin. Moreover, puncture resistance can be secured despite the thickness at the tire equatorial plane being no greater than 5 mm.

In the tire 70, the resin reinforcing layer 50 is formed with a greater width than the belt layer 80. The belt layer 80 is thus covered by the resin reinforcing layer 50, and is less susceptible to deformation. Specifically, since the resin reinforcing layer 50 is further toward the tire radial direction outside than the belt layer 80, input of external force to the belt layer 80 is suppressed by the resin reinforcing layer 50. Deformation of the belt layer 80 is accordingly suppressed. The belt layer 80 is thus less susceptible to damage.

Note that the resin reinforcing layer 50 may be formed narrower in width than the belt layer 80. Specifically, the width direction end portions 50EW of the resin reinforcing layer 50 may be disposed further toward the tire width direction inside than the width direction end portions 80EW of the belt layer 80.

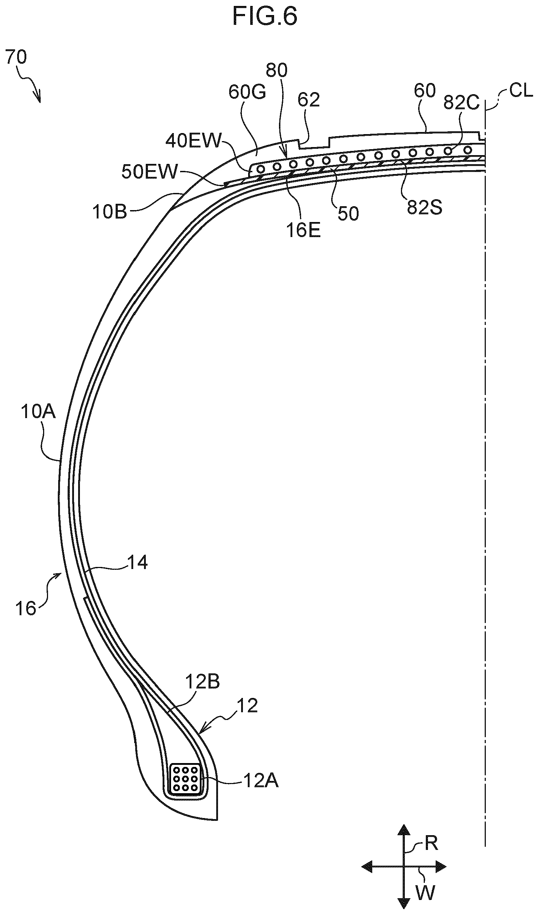

Moreover, as illustrated in Fig. 6, the resin reinforcing layer 50 may be laid at the tire radial direction inside of the belt layer 80. In such cases, the width direction end portions 50EW of the resin reinforcing layer 50 are preferably disposed further toward the tire width direction inside than the width direction end portions 80EW of the belt layer 80. Rigidity is thereby supplemented by the resin reinforcing layer 50 even when the belt layer 80 attempts to deform toward the tire radial direction inside in response to an external force, thus suppressing such deformation.

Although the single resin-covered cord 42 and the rubber-covered cord are wound around the periphery of the carcass 14 in a spiral pattern in the exemplary embodiments described above, exemplary embodiments of the present disclosure are not limited thereto. For example, configuration may be made in which two or more resin-covered cords or rubber-covered cords are wound in a spiral pattern, or configuration may be made in which the angle of inclination with respect to the tire circumferential direction is increased and the cord is wound around the tire circumferential direction for less than one full circuit. As can be seen from the above, various implementations of the present disclosure are possible.

The disclosure of Japanese Patent Application No. 2018-093001, filed on May 14, 2018, is incorporated in its entirety by reference herein. All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A pneumatic tire comprising:
a pair of bead cores;
a carcass that is formed spanning the pair of bead cores;
a belt layer that is disposed at a tire radial direction outside of the carcass and that is formed by covering a cord with a thermoplastic resin having an elastic modulus of from 100 MPa to 10,000 MPa and winding the cord around a tire circumferential direction; and
a tread that is provided at a tire radial direction outside of the belt layer;
a thickness of the pneumatic tire at a tire equatorial plane being no greater than 5 mm.

2. A pneumatic tire comprising:
a pair of bead cores;
a carcass that is formed spanning the pair of bead cores;
a belt layer that is disposed at a tire radial direction outside of the carcass and that is embedded with a cord wound around a tire circumferential direction;
a reinforcing layer that is provided at at least one of a tire radial direction outside or a tire radial direction inside of the belt layer, and that is formed from a thermoplastic resin having an elastic modulus of from 100 MPa to 10,000 MPa; and
a tread that is provided at the tire radial direction outside of the belt layer and the reinforcing layer;
a thickness of the pneumatic tire at a tire equatorial plane being no greater than 5 mm.

3. The pneumatic tire of claim 2, wherein a tire width direction end portion of the reinforcing layer is disposed further toward a tire width direction outside than a tire width direction end portion of the belt layer.

4. The pneumatic tire of any one of claim 1 to claim 3, wherein the belt layer is formed by winding the cord in a spiral pattern around the tire circumferential direction.

5. The pneumatic tire of any one of claim 1 to claim 4, wherein an angle of inclination of the cord with respect to the tire circumferential direction is no greater than 10° at the tire equatorial plane.
